# EUROPEAN PATENT SPECIFICATION

(11) **EP 1 537 572 B1**
(45) Date of publication and mention of the grant of the patent: **02.01.2008**
(21) Application number: 03763977.0
(22) Date of filing: 08.07.2003
(51) Int. Cl.: G11B 20/00, G11B 19/12, G11B 19/04

(54) **ACCESS CONTROLLED OPTICAL DISC AND METHOD THEREFOR**
ZUGANGSGEREGELTER OPTISCHER DATENTRÄGER UND VERFAHREN DAFÜR
DISQUE OPTIQUE A ACCES CONTROLE ET TECHNIQUE AFFERENTE

(30) Priority: 11.07.2002 GB 0216142
(43) Date of publication of application: 08.06.2005
(73) Proprietor: H.T.A High Tech Applications Holdings Limited, 1096 Nicosia (CY)
(72) Inventor: KNOX, Alistair, John, Reading Berkshire RG5 4AW (GB); WIJNEN, Arie, Marinus, Hayes Middlesex UB4 8LB (GB)
(74) Representative: Frost, Alex John
(86) International application number: PCT/GB2003/002968
(87) International publication number: WO 2004/008456

(56) References cited:
- EP-A- 1 093 120

## Description

The present invention relates to a method of controlling access to an optical disc, in particular when read by an optical disc data reader such as, for example, a CD-ROM drive in a personal computer. The invention also relates to an optical disc to which access is controlled.

All digital audio compact discs (CD-DAs) are manufactured to an International Standard (IEC International Standard 908), which is more commonly known to those skilled in the art as the Philips^{™} and Sony^{™} "Red Book" standard. This sets strict parameters on such features as the physical dimensions of the disc, the EFM data encoding scheme and the Reed-Solomon error correction which is employed. Compact disc read-only memories (CD-ROMs), by contrast, are encoded to a different standard (ISO/IEC International Standard 10149), which is more commonly known to those skilled in the art as the "Yellow Book" standard. The Yellow Book standard incorporates but extends the Red Book standard such that, as a rule, a CD-ROM drive in a computer can make the data on the CD-ROM available to a computer system (for manipulation, execution or copying), but can also read the audio signal data on a CD-DA.

Digital copying, by producing essentially perfect copies of the original, has resulted in many millions of illegal copies of CDs or other digital information carriers being made. This, in turn, has led to a significant loss in copyright royalties. A substantial proportion of this unauthorized activity is associated with home copying and so considerable effort in recent years has been directed to developing various methods to prevent copying of audio compact discs onto readily available low cost digital media.

In general these developments can be characterized as aiming to produce either a processed complete disc or a disc with selected processed tracks, which have thereby been rendered difficult to copy successfully on certain types of data reader. These attempts at digital audio copy protection have usually focused on the prevention of copying, or even playing, on a personal computer (PC). Most of the prior art techniques utilize differences in the manner in which optical disc data readers and CD audio devices access and playback the data on an optical disc.

WO-A-99/57723 discloses a method that involves interrupting the laser beam used to record a CD or glass master disc, the duration, frequency and placement of the laser beam interruptions being dependent on the content of the data being recorded.

WO-A-00/74053 discloses a method whereby selected control data on a CD is rendered incorrect, such incorrect data not being generally accessed or read by an audio player but being such as to render the CD unplayable by a data reader.

WO-A-01/61695 discloses a method whereby the timing and/or navigation data in the P- and Q-subchannels of a CD is rendered incorrect or inaccurate, thus interfering with the extraction or reading of the audio data by a data reader.

US-B-6208598 discloses a method whereby selected sequences of audio data samples are substituted by incorrect data and the corresponding part of the P-channel is altered to prevent the incorrect data samples being passed to the digital-to-analogue converter of an audio player, an interpolated value being used instead. A copy disc however will not generally have the modified P-channel and so the incorrect data will he replayed, causing audible distortion.

WO-A-01/15028 and WO-A-01/41130 disclose a method whereby selected audio signal data symbols are overwritten with grossly-erroneous values, the error correction parity symbols associated with the said data symbols are then located and overwritten in such a way as to create uncorrectable errors in the codewords containing the erroneous values, such that a CD player will apply interpolative error-concealment to prevent the output of the error.

EP-A-1 093 120 (SONOPRESS) 18 April 2001 discloses an optical disk medium containing audio data of CD-DA format in which a data file (autorun.inf) and a copy protection program are added to the disk such that when the disk is placed in a computer CD-ROM drive and not a dedicated CD-DA player the copy protection program starts automatically, preventing illegal copying of the audio data.

The above systems of necessity all suffer from limitations, either by limiting the strength (and thereby the effectiveness) of the applied copy protection process in order to attempt to ensure 100% compatibility on all types of audio player, or by deliberately limiting its compatibility to certain types of replay device. Such limitation in use is likely to be commercially unattractive.

It is an object of the present invention to provide a method of content access control, particularly but not exclusively for controlling access to audio material recorded on optical discs. It is a further object of the present invention to provide an optical disc whose data is access controlled.

According to a first aspect of the present invention, there is provided an optical disc as defined in claim 1.

The approach taken by the present invention relies upon the different way in which different types of replay device locate tracks upon the disc. By optical disc data reader is meant any device which allows random reading of data upon the disc, such as a CD-ROM drive or the like. Such devices are normally a part of a personal computer. Optical disc data readers are to be contrasted with CD-DA players such as are found in hi-fi or stereo players, which use a more sequential approach to the reading of digital audio data and which cannot read, for example, compressed audio data.

Preferably, there are a plurality of primary tracks and a plurality of alternate tracks, at least one of the primary tracks having an associated alternate track. Either one, several, or all of the main/primary tracks on the disc may be provided with associated alternate/secondary tracks.

For example, consider an optical disc with 10 tracks, 7 of which are primary tracks and 3 of which are alternate tracks. Consider also that the three alternate tracks each have a corresponding primary track. In that case, the three alternate tracks may include data which, when replayed, is substantially identical to that of the three corresponding primary tracks. However, importantly, whilst a CD-DA player may access the primary tracks (and, preferably, only the primary tracks), an optical disc data reader is able instead to access the four primary tracks which have no alternate track counterpart, and the 3 alternate tracks.

In general terms, where an optical disc has m primary tracks and n alternate tracks, (where m≥1 and n≥1, so that there are m+n in total), the disc access information preferably indicates to an optical disc data reader that there are only m tracks in total on the disc, made up of n alternate tracks and (m-n) primary tracks. Of course, in that case the disc access information preferably indicates to a CD-DA player that there are likewise only m tracks, though here these are the m primary tracks.

The benefit of this becomes most apparent when, for example, those primary tracks which would, with prior art optical discs, be the most likely to be pirated are recorded with corresponding alternate tracks. Then, the primary tracks (which will be accessed by a CD-DA player) can be played normally on a CD-DA player. When the disc is accessed by an optical disc data reader, however, it is able to locate only 4 of the 7 primary tracks (which may be of less concern to the copyright holder in those tracks, for example), and the three alternate tracks.

The alternate tracks may in preferred embodiments comprise standard uncompressed digital audio (CD-DA) format data. Whilst the optical disc data reader may be able to play back the three alternate tracks (in this example) as well (so that the output of an audio player on a personal computer is substantially the same for all 7 accessible tracks as the output of the 7 primary tracks when played back via a CD-DA player), in that case the alternate tracks can be copy protected or otherwise altered to prevent copying through data extraction and, optionally, by the subsequent use of a CD writer in communication with the optical disc data reader.

In one embodiment, the alternate tracks may be copy protected using known techniques. Thus, the above exemplary disc access control arrangement potentially provides for playback of all 7 primary tracks without any issues of compatibility with CD-DA players, but may allow copy protection of some (or, indeed, all) of the same tracks when played by an optical disc data reader by the use of the alternate tracks. Nevertheless, it is to be understood that the alternate tracks do not necessarily have to encode the same audio information as their corresponding primary tracks. Depending on the application, the associated alternate tracks may either be shorter, the same length or longer than the corresponding primary track. For example, rather than copy protecting the alternate tracks, a primary track representing a piece of music may be associated with a short excerpt from that piece of music which forms the associated alternate track. Then, a CD-DA will play all of the piece of music (but without the risk of it being digitally copied at least onto another optical disc), whereas only the excerpt will be played back when (to a user) the apparent same track is accessed by an optical disc data reader.

As an additional or alternative feature, depending on the application, the alternate tracks may carry a short message, such as: "This disc is access controlled". Such a message may be included either by itself, or following a few seconds of the same content as contained on the primary track, or superimposed over a few seconds of the same content as contained on the corresponding primary track. Such a message may be repeated, if this is felt necessary to convey the relevant information.

As a further additional or alternative feature, the associated alternate tracks may comprise a monophonic version of the same content as contained on the corresponding primary track on one channel (left or right) and a spoken message as described above on the other channel (right or left). Such alternate tracks would thereby reproduce the required spoken message when replayed on an optical disc data reader and also be copied in this same form onto any copy made of the content but nonetheless permit replay of the monophonic version of the content (without the message) by suitable adjustment of the left/right balance control provided in any disc replay software associated with the optical disc data reader. Alternatively, the associated alternate tracks may comprise the same content as contained on the corresponding primary track but with the spoken message added in opposite phase on the two channels (left and right), whereby any stereo reproduction would include the message but a monophonic reproduction would not include the message.

As yet a further alternative or additional feature, the associated alternate tracks may comprise the same content as contained on the corresponding primary track but with a degraded quality, such that the content is still suitable for listening to in a workplace, for example, but is unsuitable for listening to in a more critical environment such as on high fidelity audio equipment. Such degradation may comprise, for example, the introduction of compression artefacts and/or the addition of low level random noise. Optionally, such noise or other interference could be added in opposite phase on the two channels, whereby any stereo reproduction or copying of the track would include the added noise but a monophonic reproduction of the track content would not include the noise or interference.

Still a further alternative or additional feature may include the use of compressed audio files in the alternate tracks. For example, the audio files of the alternate tracks may be compressed using MPEG 2/level 3 (MP3), Ogg Vorbis^{™}, streaming audio (e.g. Real Audio^{™} or Windows^{™} Media), or some other form of audio data compression scheme generally accessible by data readers.

Such compressed tracks may incorporate a digital rights management technique allowing access by a data reader subject to certain conditions pre-set by the rights owner at the time of creation of the disc. Such conditions, for example, may allow the tracks to play on only a limited number of occasions, or for a limited number of days after first being accessed by that particular data reader, or they may allow the tracks to be uploaded to the data reader's hard disk but then bind the track to that particular data reader to prevent usable copies of that track being distributed.

When the alternate tracks include standard CD-DA format audio data (rather than compressed audio), and in particular when the alternate tracks are shorter than the primary tracks, it may be desirable to include additional compressed audio data which can be recorded to the disc in a second session using known techniques. The use of additional compressed audio files, recorded in a second session, when combined with the foregoing and following methods, provides a significant improvement over the known technique of combining copy protected CD audio tracks with compressed audio files.

The above-mentioned advantages of the invention result at least partly from a method for identifying and editing track data in the Table of Contents (TOC) of the disc. An embodiment of the invention therefore allows editing the information in the Point field of the TOC entries both for the primary and for the secondary tracks and also in certain other TOC data fields which relate to the disc as a whole.

In preference, the disc access information is included within a table of contents (TOC) of the optical disc, the TOC having a track number indicator indicative of the track number for each of the tracks on the disc, the track number indicator for the or each primary track which has an associated alternate track preferably being set to zero.

In a further alternative, the entry or entries in the TOC for the or each primary track are swapped with the respective entry or entries for the or each of the corresponding alternate tracks.

In still a further preferred feature of the present invention, the disc access information is modified so that starting time of at least one of the primary tracks for which there is a corresponding alternate track is changed to the starting time of that alternate track. Entries in the disc access information relating to the primary tracks may optionally be deleted. The advantage of this procedure is that the data related to the relevant primary track(s) is removed from the disc access information (e.g. the TOC) and thus cannot be readily regenerated by someone intent on gaining access to such primary tracks on a data reader.

The track number indicator for the or each alternate track which has a corresponding primary track is preferably set to indicate the track number of the corresponding primary track.

In each case, it is preferable that the number of tracks on the disc, as indicated to a CD-DA player, is equal to the number of primary tracks only. A CD-DA player will then ignore any alternate tracks.

In a preferred embodiment, the optical disc may include substitute disc access information stored within one or more of the alternate tracks in encrypted form, the substitute disc access information, when decrypted, being readable by an optical disc data reader and further being utilized thereby, when so decrypted, to permit location of the primary track(s). In that case, it is preferable that the optical disc also includes a further track, which in turn includes software code that, when executed by a computer that controls the optical disc data reader, causes the substitute disc access information to be decrypted. The software code may, for example, be executed automatically upon inserting the disc into the computer. Provided that a correct password or the like is entered by a user upon prompting by the computer, the substitute disc access information may then be decrypted and used instead of the "default" disc access information stored upon the disc and which would otherwise be used to control disc access. For example, the substitute disc access information may allow access to the, some more, or all of the primary tracks. The manner of decryption does not form a part of the present invention. However it will be understood that the password, for example, used to initiate the decryption by the software code on the disc may be subject to purchase by a user so that, in effect, a user pays for unlimited access to (including a licence to copy, perhaps) the primary track(s). If the user does not enter a valid password when prompted, it will be understood that the user need not be prevented from accessing the disc at all, but the original (default) disc access information would then continue to be used so that the user has restricted or no access to the primary tracks.

It is to be understood that the substitute disc access information need not necessarily be included as one of the alternate tracks but may instead be written to the disc in a second session (using known techniques), as described above.

According to a second aspect of the present invention, there is provided a method of generating data for writing onto an optical disc in claim 26.

In preference, the disc access control information also indicates to a CD-DA player that there are only m tracks on the disc. Preferably, the m tracks indicated to be present to a CD-DA player are different from the m tracks indicated to be present to an optical disc data reader. For example, an optical disc data.reader may determine from the disc access control information that there are n alternate tracks and (m-n) primary tracks, whereas a CD-DA player may simply determine the presence of the m primary tracks.

The invention also extends to an optical disc master upon which is written or stamped data in accordance with the foregoing techniques. This optical disc master may in turn be used to produce, either directly or indirectly, one or more optical discs.

In an alternative aspect, the invention extends to an optical disc onto which data is burned, the data having been generated in accordance with the foregoing techniques.

According to still a further aspect of the present invention, there is provided a method of controlling access by an optical disc data reader to an optical disc as defined in claim 39.

The invention may be put into practice in a number of ways, and some of these will now be described by way of example only and with reference to the accompanying drawings in which:
Figure 1 is a process flow diagram showing a sequence of operations to produce an edited TOC and an access-controlled disc according to an embodiment of the invention;
Figure 2 shows a Table of Contents (TOC) for an original unmodified disc;
Figure 3 shows an edited Table of Contents (TOC) for an access-controlled disc according to a first embodiment of the invention;
Figure 4 shows an edited Table of Contents (TOC) for an access-controlled disc according to a second embodiment of the invention; and
Figure 5 shows an edited Table of Contents (TOC) for an access-controlled disc according to a third embodiment of the invention.

It will be understood by those skilled in the art that part of the data stream on a CD-DA (audio CD) is set aside to carry sevéral sub-code channels, labeled P, Q,R,S,T,U,V and W. Only the P and Q subchannels contain control data for the disc. The Q subchannel can operate in four modes, of which only three (Modes 1, 2 and 3) carry active data. When the Q subchannel is operating in Mode 1, it carries data for the disc lead-in zone, the program zone and the disc lead out zone.

The Q subchannel data content in the lead-in zone differs from the data elsewhere on the disc. In mode 1, the lead-in data comprises the Table of Contents (TOC) for the disc. The TOC stores data indicating, inter alia, the number of audio tracks and the starting times of each track.

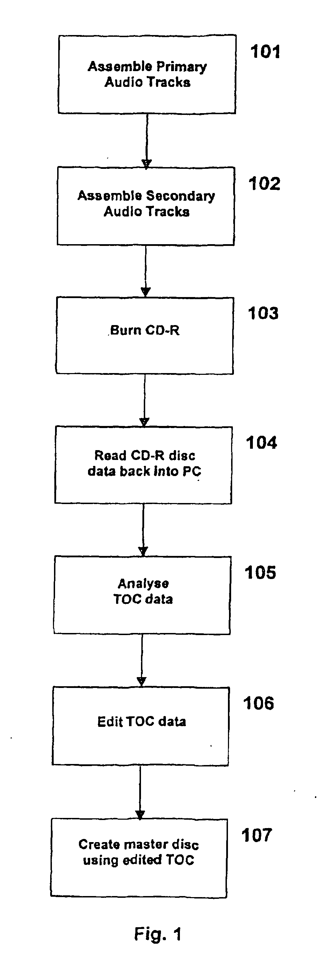

Referring now to Figure 1, a process flow diagram of a sequence of operations to produce an edited (TOC) is shown.

Each of an array of first tracks for a CD, referred to hereinafter as "primary" tracks are first assembled at step 101 on a PC's hard disk. Next, a further set of tracks, referred to hereinafter as "alternate tracks" are assembled in the corresponding order (step 102) on the PC's hard disc. A CD-R disc is then burned at step 103, using readily available CD-R burning software which will be well known to those skilled in the art and does not form a part of the present invention. It should be noted at this point that it is important that the tracks are assembled by the CD-R burning software in such a way that all the primary tracks (including any that may not have corresponding secondary tracks) are recorded on the disc first, in the required program order. This complete sequence of primary tracks is then followed by the secondary tracks in the relevant sequence. At step 104, the CD-R is then read back into the PC and at step 105, the TOC is analysed. The TOC is then edited at step 106 and this edited TOC is then used to produce a master disc image at step 107.

This sequence of actions is taken in order that the initial TOC data may be created by the chosen disc burning software to match precisely the way in which it assembles the tracks on the disc and this data is then edited. However, it should be noted that it is equally possible to generate an edited TOC directly, provided the precise duration of every track, the disc lead-in, the inter-track pauses and the disc lead-out is known.

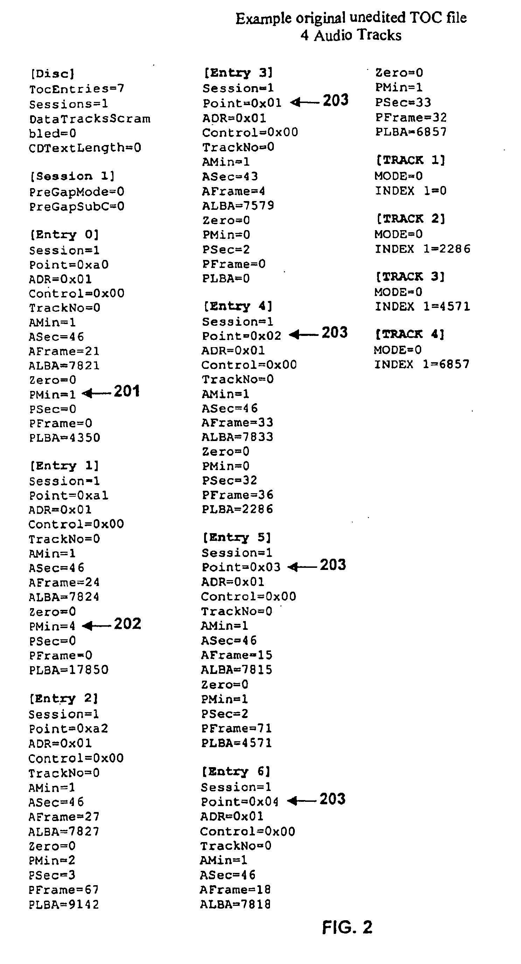

Figure 2 illustrates the unedited TOC data for a sample disc containing four audio tracks of approximately 30 seconds duration each. When the Point field is set to 0xa0 as in Entry 0, the minute field Pmin of that Entry 0, 201, shows the number of the first track on the disc. When the Point field is set to Oxa1 as in Entry 1, the minute field Pmin of Entry 1, 202, shows the number of the last track on the disc. Entries 3, 4, 5 and 6 contain the data relating to each program track and in this example the Point field 203 of each entry (in the form 0xnn, where nn is the relevant track number in hexadecimal format) indicates the track number. It should be noted that the numbered Entries (0, 1, 2, 3 4, etc.) in square brackets [ ] are merely headings for convenience of reference, which are treated by the CD burning software as comments which are not to be acted upon.

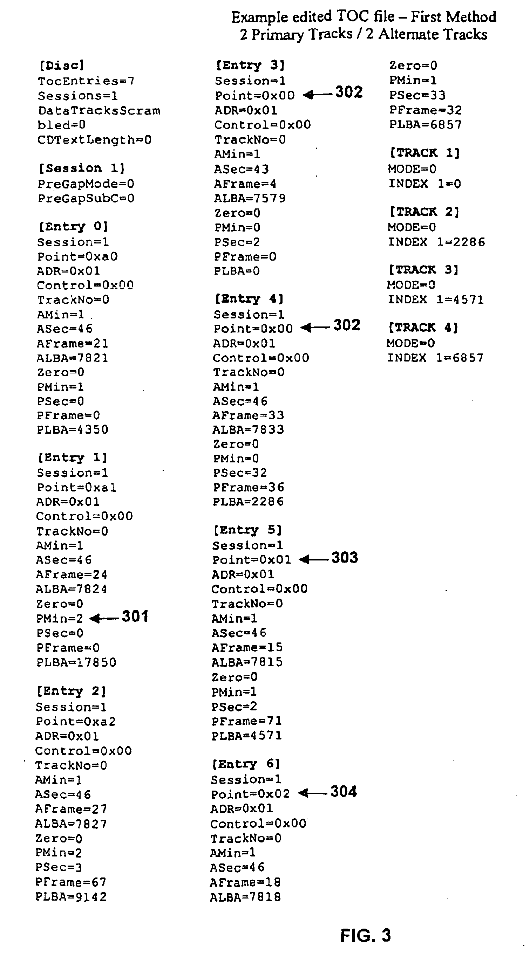

Figure 3 illustrates the edited TOC data resulting from the application, to a sample disc, of a first method in accordance with the present invention. In the embodiment of Figure 2, the sample disc contains four tracks, comprising two primary tracks of approximately 30 seconds duration each, and two tracks nominated as alternate tracks, also of approximately 30 seconds duration each. First, the number of tracks on the disc, as noted at 301 in the minute field Pmin of Entry 1, is modified to correspond with the number of primary tracks only (i.e. 2 in this case). Secondly, the data in the Point field 302 for each primary track for which there is a corresponding alternate track is then changed to read 0 (zero), and finally the data in the Point field of each corresponding alternate track is then edited so as to have the track number of the relevant primary track, so in this example the Point field 303 for track 3 (Entry 5) is changed to 0x01 and the Point field 304 for track 4 (Entry 6) is changed to 0x02.

A TOC edited as described in connection with Figure 3 may be written back to an optical disc as described above in connection with Figure 1. An optical disc including such an edited TOC will be access controlled as follows.

A CD-DA attempting to access a disc with a TOC edited in accordance with Figure 3 will be told that there are only two tracks on the disc. This is because CD-DA players use the information in the Pmin field 301 of Entry 1 to determine the number of tracks m on the disc. The first m tracks are then read. Any tracks after the mth track are then ignored by a CD-DA player. Thus, by setting the Entry 1 Pmin pointer to 2, in this example, a CD-DA will ignore the 2 "extra" alternate tracks after the primary tracks.

By contrast, when an optical disc data recorder accesses a disc with a TOC thus modified, it uses the information in the Pmin field 201 of Entry 0 to determine the number of the first track on the disc, and then searches for that number in the Point fields of the information in the PTime fields of the numbered track entries to determine the location on the disc of the relevant tracks, as well as using the information in the Pmin field 301 of Entry 1. Thus, an optical disc data reader is always directed to the two alternate tracks and is not aware of the presence of the two primary tracks.

The method described in connection with Figure 3 is generally applicable, not just in the case (as described) where there are equal numbers of primary and alternate tracks. In certain circumstances, it may be desirable to include fewer alternate tracks than primary tracks, for example when there are a number of tracks the copying of which would not be of significant concern to a copyright holder. For example, there may be 10 tracks in total on a disc, 7 of which are primary tracks and three of which are alternate tracks. Then, three of the primary tracks may have corresponding alternate tracks, so that 4 of the primary tracks have no corresponding alternate track. Then, a CD-DA will locate the 7 primary tracks and an optical disc data reader will locate 4 of the 7 primary tracks and the three alternate tracks.

It will therefore be understood that, even though there are a total of m primary + n alternate tracks on such a disc, different devices (CD-DA player and CD-ROM drive, for example) will both access, in preferred embodiments, the same number of tracks (the m primary tracks in the case of the CD-DA player, and the (m-n) + n (=m) primary and alternate tracks in the case of the optical disc data reader).

Whilst the technique described above does require that there are more tracks in total (m+n) than are ever used by a single device (CD-DA player or CD-ROM drive), the effective reduction in disc capacity is not considered to be a significant handicap, particularly given the benefits of the invention. Indeed, most audio CDs do not use anywhere near their maximum storage capacity (equivalent to about 70 to 80 minutes of audio data in CD-DA format). Thus, even where all of the primary tracks have alternate tracks that are in CD-DA format (perhaps with some form of copy protection) and where each of those alternate tracks are of equal or substantially equal length to their corresponding primary tracks, disc space is not usually a problem. In many cases, the alternate tracks may in fact be substantially shorter than the primary tracks (containing, perhaps, CD-DA audio representing an excerpt of the corresponding primary track, or a spoken copy protection warning as described above). Moreover, the alternate tracks, which are always accessed exclusively by an optical disc data reader rather than a CD-DA player in the described embodiments, can employ known audio compression techniques such as Moving Pictures Experts Group (MPEG) 2/level 3 (MP3), Ogg Vorbis^{™}, streaming audio (e.g. Real Audio^{™} or Windows^{™} Media), or some other form of audio data compression scheme generally accessible by data readers, to reduce the size of the alternate tracks.

When the alternate tracks include standard CD-DA format audio data (rather than compressed audio), it may be desirable to include additional compressed audio data which can be recorded to the disc in a second session using known techniques. The use of additional compressed audio files, recorded in a second session, when combined with the foregoing and following methods, provides a significant improvement over the known technique of combining copy protected CD audio tracks with compressed audio files. A CD-DA player will, of necessity, have to read a processed copy protected track when attempting to play back the latter type of disc. This in turn may well result in playback artefacts as will be the case with some of the prior art arrangements set out above. A CD-DA player playing a disc formed in accordance with embodiments of the present invention will, by contrast, not have to play a processed (primary) track so that no possibility of playback artefacts exists. When an optical disc data reader plays back a disc in accordance with the present invention, however, it is directed to the alternate tracks, optionally along with the additional compressed audio files recorded in the second session. A voice message on the alternate tracks can direct the data reader user to play the compressed files if they wish to listen to the disc content. If desired, a software player for the compressed files can be bundled with the compressed files on the disc, and this software player can be set to autoplay when the disc is inserted in the data reader. If a copy of such a disc were made, the only content which would appear on the copied disc would be the alternate tracks and (subject to the characteristics and settings of the copying software utilised) any data content, such as the alternative compressed files along with the software player where present.

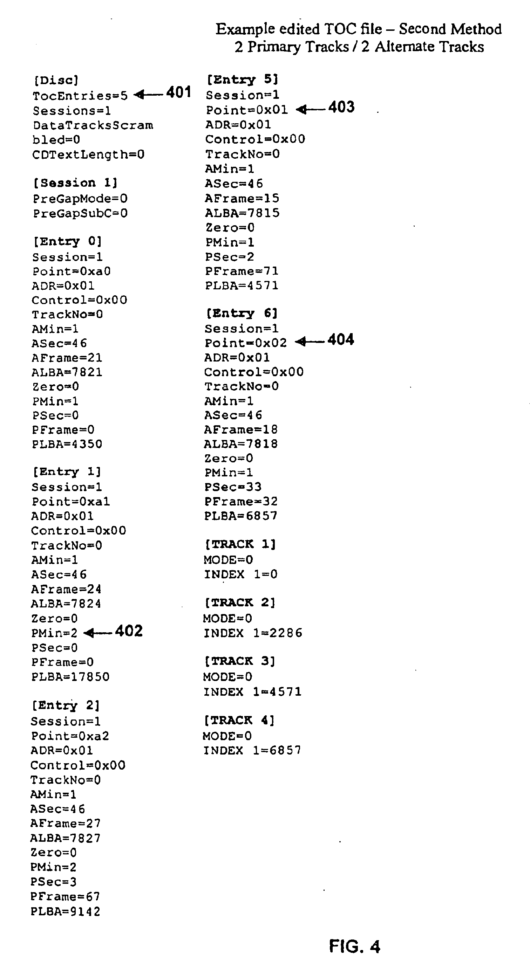

Figure 4 illustrates the edited TOC data resulting from the application to the same unedited sample disc (Figure 2) of a second method which embodies the present invention. First, the number of TOC entries is reduced by the number of secondary tracks on the disc - in this example with 2 secondary tracks, the number of entries (indicated in Figure 4 at 401) is reduced from 7 to 5. Secondly, the number of tracks on the disc, as noted in the minute field Pmin 402 of Entry 1, is modified to correspond with the number of primary tracks only (i.e. 2). Thirdly, the entries for each primary track for which there is a corresponding alternate track are completely deleted (in this case Entries 3 and 4), and finally the data in the Point field of each corresponding alternate track is then edited so as to have the track number of the relevant primary track, so in this example the Point field 403 for track 3 (Entry 5) is changed to 0x01 and the Point field 404 for track 4 (Entry 6) is changed to 0x02. This second method has the advantage that the data related to the relevant primary tracks has been removed from the TOC and thus cannot be readily regenerated by someone intent on gaining access to such primary tracks on a data reader.

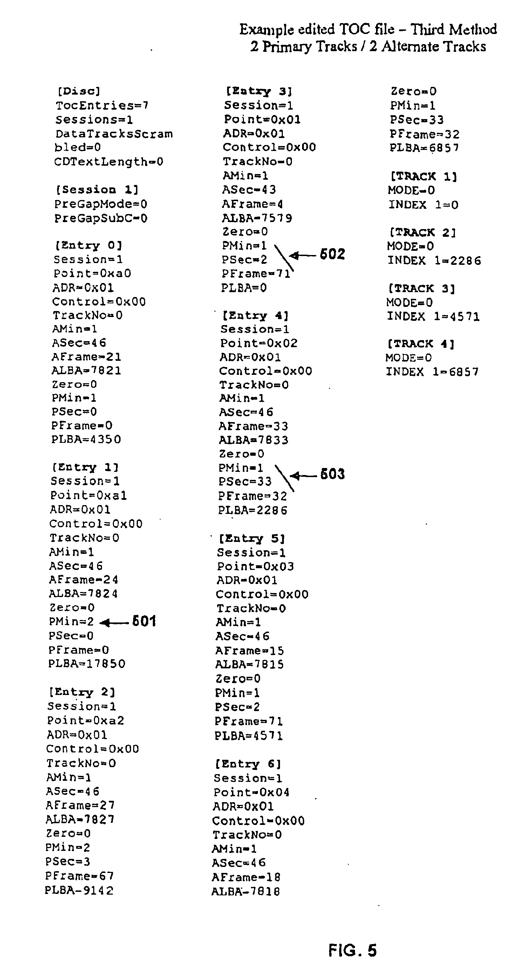

Referring now to Figure 5, a third method according to an embodiment of the present invention is illustrated. First, the number of tracks on the disc, as noted in the minute field Pmin, 501, of Entry 1, is modified so as to correspond with the number of primary tracks only, in this case 2. Secondly, the data in the PTime field for each primary track for which there is a corresponding alternate track is changed so as to have the relevant starting time of that corresponding alternate track, so in this example the Pmin, Psec and Pframes fields 502 for track 1 (Entry 3) are changed to 1, 2 and 71 respectively, whilst the Pmin, Psec and Pframes fields 503 for track 2 (Entry 4) are changed to 1, 33 and 32. Having done this, it is not necessary to delete the Entries 5 and 6, although this may be done if desired. Of course, if these two entries are removed, then it is necessary in consequence to amend the total number of TOC entries as is done with the second-method described above in connection with Figure 4. As with that second method, this third method has the advantage that the data related to the relevant primary tracks has been removed from the TOC and thus cannot be readily regenerated by someone intent on gaining access to such primary tracks on a data reader.

In a fifth method embodying the present invention, the complete TOC entries for the alternate tracks are swapped with those of the primary tracks and the track numbers exchanged so that the alternate tracks have the track numbers of the primary tracks and vice versa. The number of tracks on the disc, as noted in the minute field Pmin of Entry 1, is again modified to correspond with the number of primary tracks only.

The methods described in the foregoing may be optionally enhanced by encrypting the alternate tracks and/or requiring a password to be entered to gain access to them. In a further embodiment, one of the alternate tracks could be an encrypted version of a different, substitute TOC, accessible only to users who are given access to the decryption key - possibly in return for paying a fee. Access to such a substitute TOC would then enable a data reader to access some, some more or all of the primary tracks. In that case, a small additional data track recorded on the disc is usually necessary, to decode and extract the encrypted substitute TOC, such that the optical disc data reader can then use that (substitute) TOC instead. Rather than including the substitute TOC as one of the alternate tracks, it will be understood that the substitute TOC may instead be written to the disc in a second session, using known techniques, as described above in connection with the addition of further compressed audio files. Optionally, any executable code to allow access to this substitute TOC may be included as a data file recorded in a second session as well.

Additional electronic security features and enhancements, known to those skilled in the art, may also be incorporated into the system for greater assurance.

It will be understood that the methods described do not of necessity require copy protection or digital rights management techniques to be applied to the alternate tracks: the methods embodying the invention can be operated in stand-alone' mode (that is, simply as a disc access control procedure) or incorporated as an extension to existing types of digital audio copy protection. By altering the number, length and nature of the alternate tracks, a wide variety of different applications is envisaged, some of which will be more appropriate to closed user groups and some of which are more applicable for use with the general public. There is independence in terms of what type of copy protection methods may be utilized, what additional security features may be incorporated and what means of CD burning software may be used.

While the preferred embodiments of the invention have been described herein, it is to be understood that the invention is not limited to these and modifications of the embodiments described may become apparent to those of ordinary skill in the art.

## Claims

1. An optical disc comprising:
at least one primary track;
at least one alternate track; and
disc data access information, stored upon the disc, and which is read and utilized only by an optical disc data reader, the disc data access information being such as to prevent location of the, or at least one of the, primary track(s), when the disc is read by the optical disc data reader, and to direct the optical disc data reader instead to the, or an associated, alternate track.

2. The optical disc of claim 1, in which there are a plurality of primary tracks and a plurality of alternate tracks, at least one of the primary tracks having an associated alternate track.

3. The optical disc of claim 2, wherein the, or at least one, primary track is an audio track encoding audio information capable of playback by a CD audio player, and wherein the, or at least one, alternate track is a data track encoding audio information capable of playback by an optical disc data reader.

4. The optical disc of claim 3, wherein the audio information encoded within a primary track on the optical disc, when played back by a CD audio player, corresponds substantially with the audio information encoded within an associated alternate track when played back by an optical disc data reader.

5. The optical disc of claim 3, wherein the audio information encoded within a primary track on the optical disc, when played back by a CD audio player, is of different length and/or different audio content to the audio information encoded within an associated alternate track when played back by an optical disc data reader.

6. The optical disc of claim 2, in which each of the primary tracks has an associated alternate track.

7. The optical disc of claim 2, further comprising a table of contents (TOC) which includes the disc data access information that is read only by the optical disc data reader.

8. The optical disc of claim 7, wherein there are m primary tracks and n alternate tracks, the disc access information indicating to an optical disc data reader that there are only m tracks in total upon the optical disc.

9. The optical disc of claim 7, wherein the TOC further comprises disc audio access information that is readable by a CD audio player.

10. The optical disc of claim 9, wherein the disc audio access information indicates to a CD audio player that there are only m tracks in total upon the disc, the disc data access information causing a first m of the m primary and n alternate tracks to be accessible to an optical disc data reader and the disc audio access information causing a second, different m of the m primary and n alternate tracks to be accessible by a CD audio player.

11. The optical disc of claim9, wherein m≥n and wherein the disc audio access information indicates to a CD audio player that there are m primary tracks only, and wherein the disc data access information indicates to an optical disc data reader that there are n alternate tracks and (m-n) primary tracks.

12. The optical disc of claim 2, wherein the disc access information is-included within a table of contents (TOC) of the optical disc, the TOC having a track number indicator indicative of the track number for each of the tracks on the disc, and wherein the track number indicator for the or each primary track which has an associated alternate track is set to zero.

13. The optical disc of claim 2, wherein the disc access information is included within a table of contents (TOC), the TOC including entries for the or each alternate track for which there is a corresponding primary track but having no entries for each such corresponding primary track.

14. The optical disc of claim 2, wherein the disc access information is included within a table of contents (TOC), the TOC including timing entries indicative of a start time for the tracks, and wherein the start time in the timing entry of at least one of the primary tracks is replaced with the start time of its corresponding alternate track.

15. The optical disc of claim 2, wherein the disc access information is included within a table of contents (TOC), the TOC comprising track number entries for each of the tracks on the optical disc, and wherein the track number entry or entries in the TOC for the or each primary track are swapped with the respective track number entry or entries for the or each of the corresponding alternate tracks.

16. The optical disc of claim 10, wherein the TOC includes a total track quantity entry indicative of the total number of tracks upon the disc, and wherein that total track quantity entry indicates only the total number of primary tracks upon the disc.

17. The optical disc of claim 12, wherein the track number indicator for the or each alternate track which has a corresponding primary track is set to indicate the track number of the corresponding primary track.

18. The optical disc of claim 1, further comprising substitute disc access information stored upon the disc in encrypted form, the substitute disc access information, when decrypted, being usable by an optical disc data reader, when so decrypted, to permit location of the primary track (s) .

19. The optical disc of claim 18, further comprising computer program code upon the disc and which, when executed, causes a computer which includes the optical disc data reader to access and decrypt the substitute disc access information, and to cause the optical disc data reader then to use the decrypted disc access information to locate tracks upon the disc.

20. The optical disc of claim 18, wherein the substitute disc access information permits location only of the primary tracks once the said substitute disc access information has been decrypted.

21. The optical disc of claim 18, wherein the substitute disc access information is stored upon the disc as an alternate track.

22. The optical disc of claim 1, wherein at least one of the alternate tracks comprises compressed or encrypted data.

23. The optical disc of claim 22, , wherein the compressed data represent an audio signal encoded to a standard such as MP3.

24. The optical disc of claim 1, in which the, or at least one of the alternate tracks, incorporates a digital rights management technique.

25. The optical disc of claim 1, in which the, or at least one of the alternate tracks, incorporates copy protection.

26. A method of generating data for writing onto an optical disc, the method comprising:
generating primary data representative of m primary track(s) for the optical disc (m≥1);
generating alternate data representative of n alternate track(s)for the optical disc (n≥1); and
assembling a table of contents (TOC) for the optical disc, the TOC containing disc access control information which, when written to an optical disc, indicates to an optical disc data reader that there are m tracks in total written upon that optical disc.

27. The method of claim 26, wherein the disc access control information further indicates to a CD-DA player that there are m tracks in total written upon that optical disc, the disc access information causing a different m of the m+n tracks to be accessible to an optical disc data reader than the m tracks which are accessible by a CD-DA player.

28. The method of claim 26, wherein the step of assembling a TOC comprises:
writing the generated primary and alternate data to an optical disc;
reading back the data thus written, including an unmodified TOC including unmodified disc access information for all of the m+n tracks, to a data analysis device; and
editing the unmodified TOC so as to produce a modified TOC containing the said disc access control information indicative to a CD audio player of the presence of the m primary tracks, and to an optical disc data reader of the presence of n alternate tracks and m-n primary tracks.

29. The method of claim 28, wherein the unmodified TOC further comprises a plurality of track number indicators, the method further comprising editing the unmodified TOC so as to alter the track number indicators for at least some of the primary tracks.

30. The method of claim 29, wherein the step of editing the unmodified TOC comprises setting to zero the track number indicators of those primary tracks which are to be altered, so that an optical disc data reader no longer detects the presence of the said altered primary track number indicator(s).

31. The method of claim 29, wherein the step of editing the unmodified TOC comprises deleting those parts of the TOC relating to at least some of the m primary tracks.

32. The method of claim 29, wherein at least one of the m primary tracks has a corresponding alternate track, the step of editing the unmodified TOC further comprising replacing the track number indicators of each of the alternate tracks which has a corresponding primary track with the track number indicator of that corresponding primary track in the unmodified TOC.

33. The method of claim 29, wherein the step of editing the TOC comprises swapping the track number indicators of at least one of the primary tracks with track number indicators for a corresponding number of alternate tracks.

34. The method of claim 28, wherein the step of editing the TOC comprises replacing the start time of the, or at least one of the, primary tracks with the start time of an associated alternate track.

35. The method of claim 28, wherein the unmodified TOC further includes a total track quantity entry, the step of editing the unmodified TOC comprising reducing the total quantity of tracks in the total track quantity entry so that it indicates, in the modified TOC, only the number of primary tracks present.

36. An optical disc master upon which is written or stamped data generated according to the method of claim 24.

37. An optical disc formed directly or indirectly from the optical disc master of claim 36.

38. An optical disc onto which data is burned, the data being generated in accordance with the method of claim 26.

39. A method of controlling access by an optical disc data reader to an optical disc having at least one primary track and at least one alternate track, the method comprising the step of preventing the location of the, or at least one of the, primary track(s) when the disc is read by the said optical disc data reader, and directing the data reader instead to the, or an associated, alternate track.

40. The method of claim 39, the method further comprising allowing the location only of the or each primary track when the disc is read by a CD-DA player.

41. The method of claim 39, wherein the disc has m primary tracks (m≥1) and n alternate tracks (n≥1), the method further comprising permitting access to the n alternate track(s) and (m-n) of the primary tracks when the disc is accessed by an optical disc data reader, and permitting access to the m primary tracks when the said disc is accessed by a CD-DA player.

## Patentansprüche

1. Optische Platte, umfassend:
wenigstens eine Primärspur,
wenigstens eine Ersatzspur, und
Plattendatenzugangsinformation, welche auf der Platte gespeichert ist und welche nur durch einen Leser für Daten einer optischen Platte gelesen und verwendet wird, wobei die Plattendatenzugangsinformation so eingerichtet ist, dass eine Lokalisierung der Primärspur oder wenigstens einer der Primärspuren verhindert wird, wenn die Platte durch den Leser für Daten einer optischen Platte gelesen wird, und der Leser für Daten einer optischen Platte stattdessen auf die oder eine zugeordnete Ersatzspur geleitet wird.

2. Optische Platte nach Anspruch 1, welche eine Mehrzahl von Primärspuren und eine Mehrzahl von Ersatzspuren aufweist, wobei wenigstens eine der Primärspuren eine zugeordnete Ersatzspur aufweist.

3. Optische Platte nach Anspruch 2, wobei die oder wenigstens eine Primärspur eine Audiospur ist, welche Audioinformation codiert, die durch einen CD-Audiospieler wiedergegeben werden kann, und wobei die oder wenigstens eine Ersatzspur eine Datenspur ist, welche eine Audioinformation codiert, die durch einen Leser für Daten einer optischen Platte wiedergegeben werden kann.

4. Optische Platte nach Anspruch 3, wobei die in einer Primärspur auf der optischen Platte codierte Audioinformation bei der Wiedergabe durch einen CD-Audiospieler im Wesentlichen der Audioinformation entspricht, die in einer zugeordneten Ersatzspur codiert ist, wenn diese durch einen Leser für Daten einer optischen Platte wiedergegeben wird.

5. Optische Platte nach Anspruch 3, wobei die in einer Primärspur auf der optischen Platte codierte Audioinformation bei Wiedergabe durch einen CD-Audiospieler eine andere Länge und/oder einen anderen Audioinhalt aufweist als die in einer zugeordneten Ersatzspur codierte Audioinformation, wenn sie durch einen Leser für Daten einer optischen Platte wiedergegeben wird.

6. Optische Platte nach Anspruch 2, wobei jede der Primärspuren eine zugeordnete Ersatzspur aufweist.

7. Optische Platte nach Anspruch 2, ferner umfassend ein Inhaltsverzeichnis (TOC), welches die Plattendatenzugangsinformation enthält, die nur durch den Leser für Daten einer optischen Platte gelesen wird.

8. Optische Platte nach Anspruch 7, wobei m Primärspuren und n Ersatzspuren vorhanden sind, wobei die Plattenzugangsinformation einem Leser für Daten einer optischen Platte anzeigt, dass insgesamt nur m Spuren auf der optischen Platte vorhanden sind.

9. Optische Platte nach Anspruch 7, wobei das TOC Plattenaudiozugangsinformation umfasst, welche durch einen CD-Audiospieler lesbar ist.

10. Optische Platte nach Anspruch 9, wobei die Plattenaudiozugangsinformation einem CD-Audiospieler anzeigt, dass insgesamt nur m Spuren auf der Platte vorhanden sind, wobei die Plattendatenzugangsinformation bewirkt, dass eine erste Zahl m der m Primär- und n Ersatzspuren für einen Leser für Daten einer optischen Platte zugänglich sind, und die Plattenaudiozugangsinformation bewirkt, dass eine zweite, andere Zahl m der m Primär- und n Ersatzspuren durch einen CD-Audiospieler zugänglich ist.

11. Optische Platte nach Anspruch 9, wobei m ≥ n und wobei die Plattenaudiozugangsinformation einem CD-Audiospieler anzeigt, dass nur m Primärspuren vorhanden sind, und wobei die Plattendatenzugangsinformation einem Leser für Daten einer optischen Platte anzeigt, dass n Ersatzspuren und (m-n) Primärspuren vorhanden sind.

12. Optische Platte nach Anspruch 2, wobei die Plattenzugangsinformation in einem Inhaltsverzeichnis (TOC) der optischen Platte enthalten ist, wobei das TOC einen Spurnummernanzeiger aufweist, der die Spurnummer für jede Spur auf der Platte angibt, und wobei der Spurnummernanzeiger für die oder jede Primärspur, welche eine zugeordnete Ersatzspur aufweist, auf Null gesetzt ist.

13. Optische Platte nach Anspruch 2, wobei die Plattenzugangsinformation in einem Inhaltsverzeichnis (TOC) enthalten ist, wobei das TOC Einträge für die oder jede Ersatzspur enthält, für welche eine zugeordnete Primärspur vorhanden ist, jedoch keine Einträge für jede solche entsprechende Primärspur enthält.

14. Optische Platte nach Anspruch 2, wobei die Plattenzugangsinformation in einem Inhaltsverzeichnis (TOC) enthalten ist, wobei das TOC Zeitsteuerungseinträge enthält, die eine Startzeit für die Spuren anzeigt, und wobei die Startzeit in dem Zeitsteuerungseintrag wenigstens einer der Primärspuren durch die Startzeit ihrer entsprechenden Ersatzspur ersetzt ist.

15. Optische Platte nach Anspruch 2, wobei die Plattenzugangsinformation in einem Inhaltsverzeichnis (TOC) enthalten ist, wobei das TOC Spurnummerneinträge für jede der Spuren auf der optischen Platte umfasst, und wobei der Spurnummerneintrag oder die Spurnummerneinträge in dem TOC für das oder jede Primärspur mit dem jeweiligen Spurnummerneintrag oder den Spurnummerneinträgen für die oder jede der entsprechenden Ersatzspuren ausgetauscht ist/sind.

16. Optische Platte nach Anspruch 10, wobei das TOC einen Gesamtspurmengeneintrag enthält, welcher die Gesamtanzahl an Spuren auf der Platte anzeigt, und wobei der Gesamtspurmengeneintrag nur die Gesamtanzahl an Primärspuren auf der Platte anzeigt.

17. Optische Platte nach Anspruch 12, wobei der Spurnummernanzeiger für die oder jede Ersatzspur, die eine entsprechende Primärspur aufweist, so gesetzt ist, dass er die Spurnummer der entsprechenden Primärspur anzeigt.

18. Optische Platte nach Anspruch 1, ferner umfassend Austauschplattenzugangsinformation, welche auf der Platte in verschlüsselter Form gespeichert ist, wobei die Austauschplattenzugangsinformation bei Entschlüsselung durch einen Leser für Daten einer optischen Platte verwendbar ist, um dann, wenn sie so entschlüsselt ist, eine Lokalisierung der Primärspur/Primärspuren zu erlauben.

19. Optische Platte nach Anspruch 18, ferner umfassend Computerprogrammcode auf der Platte, welcher dann, wenn er ausgeführt wird, einen den Leser für Daten einer optischen Platte enthaltenden Computer dazu veranlasst, auf die Austauschplattenzugangsinformation zuzugreifen und diese zu entschlüsseln, und den Leser für Daten einer optischen Platte dann dazu veranlasst, die entschlüsselte Plattenzugangsinformation zum Lokalisieren von Spuren auf der Platte zu verwenden.

20. Optische Platte nach Anspruch 18, wobei die Austauschplattenzugangsinformation dann, wenn die Austauschplattenzugangsinformation einmal entschlüsselt worden ist, nur die Lokalisierung der Primärspuren erlaubt.

21. Optische Platte nach Anspruch 18, wobei die Austauschplattenzugangsinformation auf der Platte als eine Ersatzspur gespeichert ist.

22. Optische Platte nach Anspruch 1, wobei wenigstens eine der Ersatzspuren komprimierte oder verschlüsselte Daten umfasst.

23. Optische Platte nach Anspruch 22, wobei die komprimierten Daten ein Audiosignal repräsentieren, welches gemäß einem Standard, wie etwa MP3, codiert ist.

24. Optische Platte nach Anspruch 1, wobei die oder wenigstens eine der Ersatzspuren eine Technik zur digitalen Rechteverwaltung einbezieht.

25. Optische Platte nach Anspruch 1, wobei die oder wenigstens eine der Ersatzspuren einen Kopierschutz einbezieht.

26. Verfahren zum Erzeugen von Daten zum Schreiben auf eine optische Platte, wobei das Verfahren umfasst:
Erzeugen von Primärdaten, welche m Primärspuren für die optische Platte repräsentieren (m ≥ 1);
Erzeugen von Ersatzdaten, welche n Ersatzspuren für die optische Platte repräsentieren (n ≥ 1), und
Einrichten eines Inhaltsverzeichnisses (TOC) für die optische Platte, wobei das TOC eine Plattenzugangskontrollinformation enthält, welche dann, wenn sie auf eine optische Platte geschrieben wird, einem Leser für Daten einer optischen Platte anzeigt, dass insgesamt m Spuren auf die optische Platte geschrieben sind.

27. Verfahren nach Anspruch 26, wobei die Plattenzugangskontrollinformation ferner einem CD-DA-Spieler anzeigt, dass insgesamt m Spuren auf diese optische Platte geschrieben sind, wobei die Plattenzugangsinformation bewirkt, dass einem Leser für Daten einer optischen Platte eine andere Zahl m der m+n Spuren zugänglich ist als die für einen CD-DA-Spieler zugängliche Zahl m von Spuren.

28. Verfahren nach Anspruch 26, wobei der Schritt der Einrichtung eines TOC umfasst:
Schreiben der erzeugten Primär- und Ersatzdaten auf eine optische Platte;
Wiederauslesen der so geschriebenen Daten einschließlich eines nicht modifizierten TOC, einschließlich einer nicht modifizierten Plattenzugangsinformation für alle der m+n Spuren, in eine Datenanalyseeinrichtung, und
Bearbeiten des nicht modifizierten TOC, um ein modifiziertes TOC zu erzeugen, welches die Plattenzugangskontrollinformation enthält, die einem CD-Audiospieler das Vorhandensein der m Primärspuren anzeigt und die einem Leser für Daten einer optischen Platte das Vorhandensein von n Ersatzspuren und m-n Primärspuren anzeigt.

29. Verfahren nach Anspruch 28, wobei das nicht modifizierte TOC ferner eine Mehrzahl von Spurnummernanzeigern umfasst, wobei das Verfahren ferner ein Bearbeiten des nicht modifizierten TOC umfasst, derart, dass die Spurnummernanzeiger für wenigstens einige der Primärspuren geändert werden.

30. Verfahren nach Anspruch 29, wobei der Schritt der Bearbeitung des nicht modifizierten TOC umfasst: Nullsetzen der Spurnummernanzeiger derjeniger Primärspuren, welche zu ändern sind, sodass ein Leser für Daten einer optischen Platte das Vorhandensein des geänderten Primärspurnummernanzeigers/der geänderten Primärspurnummernanzeiger nicht mehr erfassen kann.

31. Verfahren nach Anspruch 29, wobei der Schritt des Bearbeitens des nicht modifizierten TOC ein Löschen derjenigen Teile des TOC umfasst, die wenigstens einige der m Primärspuren betreffen.

32. Verfahren nach Anspruch 29, wobei wenigstens eine der m Primärspuren eine zugeordnete Ersatzspur aufweist und wobei der Schritt des Bearbeitens des nicht modifizierten TOC ferner umfasst: Ersetzen der Spurnummernanzeiger einer jeden der Ersatzspuren, die eine entsprechende Primärspur aufweist, mit dem Spurnummernanzeiger der entsprechenden Primärspur in dem nicht modifizierten TOC.

33. Verfahren nach Anspruch 29, wobei der Schritt des Bearbeitens des TOC ein Austauschen der Spurnummernanzeiger wenigstens einer der Primärspuren mit Spurnummernanzeigern für eine entsprechende Zahl von Ersatzspuren umfasst.

34. Verfahren nach Anspruch 28, wobei der Schritt des Bearbeitens des TOC ein Ersetzen der Startzeit der Primärspur oder wenigstens einer der Primärspuren mit der Startzeit einer zugeordneten Ersatzspur umfasst.

35. Verfahren nach Anspruch 28, wobei das nicht modifizierte TOC ferner einen Gesamtspurmengeneintrag umfasst und wobei der Schritt des Bearbeitens des nicht modifizierten TOC eine Reduzierung der Gesamtmenge an Spuren in dem Gesamtspurmengeneintrag umfasst, sodass dieser in dem modifizierten TOC nur die Zahl an vorhandenen Primärspuren anzeigt.

36. Optische Masterplatte, auf welche Daten geschrieben oder gestanzt sind, die gemäß dem Verfahren des Anspruchs 24 erzeugt worden sind.

37. Optische Platte, welche direkt oder indirekt von der optischen Masterplatte des Anspruchs 36 ausgebildet ist.

38. Optische Platte, auf welche Daten gebrannt sind, wobei die Daten nach Maßgabe des Verfahrens des Anspruchs 26 erzeugt worden ist.

39. Verfahren zur Kontrolle des Zugangs durch einen Leser für Daten einer optischen Platte auf eine optische Platte, welche wenigstens eine Primärspur und wenigstens eine Ersatzspur aufweist, wobei das Verfahren den Schritt umfasst, die Lokalisierung der Primärspur oder wenigstens einer der Primärspuren zu verhindern, wenn die Platte durch den Leser für Daten einer optischen Platte ausgelesen wird, und Führen des Datenlesers stattdessen auf die oder eine zugeordnete Ersatzspur.

40. Verfahren nach Anspruch 39, wobei das Verfahren ferner ein Zulassen der Lokalisierung nur der oder nur jeder Primärspur umfasst, wenn die Platte durch einen CD-DA-Spieler gelesen wird.

41. Verfahren nach Anspruch 39, wobei die Platte m Primärspuren (m ≥ 1) und n Ersatzspuren (n ≥ 1) aufweist, wobei das Verfahren ferner umfasst:
Zulassen des Zugriffs auf die n Ersatzspur/Ersatzspuren und die (m-n) der Primärspuren, wenn auf die Platte durch einen Leser für Daten einer optischen Platte zugegriffen wird, und Zulassen des Zugriffs auf die m Primärspuren, wenn auf die Platte durch einen CD-DA-Spieler zugegriffen wird.

## Revendications

1. Disque optique comprenant :
au moins une piste principale ;
au moins une piste auxiliaire; et
de l'information d'accès de données de disque, mémorisée sur le disque, et qui est lue et utilisée seulement par un lecteur de données de disque optique, l'information d'accès de données de disque étant propre à empêcher la localisation de la, ou au moins une des, pistes principales, lorsque le disque est lu par le lecteur de données de disque optique, et pour diriger, à la place, le lecteur de données de disque optique vers la, ou une, piste auxiliaire, associée.

2. Disque optique selon la revendication 1, dans lequel il y a une pluralité de pistes principales et une pluralité de pistes auxiliaires, au moins l'une des pistes principales ayant une piste auxiliaire associée.

3. Disque optique selon la revendication 2, dans lequel la, ou l'au moins une, piste principale est une piste audio codant de l'information audio susceptible de reproduction par un lecteur de CD audio, et dans lequel la, ou l'au moins une, piste auxiliaire est une piste de données codant de l'information audio susceptible de reproduction par un lecteur de données de disque optique.

4. Disque optique selon la revendication 3, dans lequel l'information audio codée dans une piste principale sur le disque optique, lorsqu'elle est reproduite par un lecteur de CD audio, correspond pratiquement à l'information audio codée dans une piste auxiliaire associée lorsqu'elle est reproduite par un lecteur de données de disque optique.

5. Disque optique selon la revendication 3, dans lequel l'information audio codée dans une piste principale sur le disque optique, lorsqu'elle est reproduite par un lecteur de CD audio, est d'une longueur différente et/ou d'un contenu audio différent de l'information audio codée dans une piste auxiliaire associée lorsqu'elle est reproduite par un lecteur de données de disque optique.

6. Disque optique selon la revendication 2, dans lequel chacune des pistes principales possède une piste auxiliaire associée.

7. Disque optique selon la revendication 2, comprenant en outre une table des matières (TOC pour "Table Of Contents") qui contient l'information d'accès de données de disque qui est lue seulement par le lecteur de données de disque optique.

8. Disque optique selon la revendication 7, dans lequel il y a m pistes principales et n pistes auxiliaires, l'information d'accès de disque indiquant à un lecteur de données de disque optique qu'il y a seulement m pistes au total sur le disque optique.

9. Disque optique selon la revendication 7, dans lequel la TOC comprend en outre de l'information d'accès audio de disque qui est lisible par un lecteur de CD audio.

10. Disque optique selon la revendication 9, dans lequel l'information d'accès audio de disque indique à un lecteur de CD audio qu'il y a seulement m pistes au total sur le disque, l'information d'accès de données de disque faisant que m premières des m pistes principales et n pistes auxiliaires soient accessibles à un lecteur de données de disque optique et l'information d'accès audio de disque faisant que m secondes, différentes, des m pistes principales et n pistes auxiliaires soient accessibles par un lecteur de CD audio.

11. Disque optique selon la revendication 9, dans lequel m ≥ n et dans lequel l'information d'accès audio de disque indique à un lecteur de CD audio qu'il y a m pistes principales seulement, et dans lequel l'information d'accès de données de disque indique à un lecteur de données de disque optique qu'il y a n pistes auxiliaires et (m-n) pistes principales.

12. Disque optique selon la revendication 2, dans lequel l'information d'accès de disque est incluse dans une table des matières (TOC) du disque optique, la TOC comportant un indicateur de numéro de piste représentatif du numéro de piste pour chacune des pistes sur le disque, et dans lequel l'indicateur de numéro de piste pour la, ou chaque, piste principale qui a une piste auxiliaire associée est mis à zéro.

13. Disque optique selon la revendication 2, dans lequel l'information d'accès de disque est incluse dans une table des matières (TOC) du disque optique, la TOC incluant des entrées pour la, ou chaque, piste auxiliaire pour laquelle il y a une piste principale correspondante mais n'ayant pas d'entrée pour chacune de ces pistes principales correspondantes.

14. Disque optique selon la revendication 2, dans lequel l'information d'accès de disque est incluse dans une table des matières (TOC) du disque optique, la TOC incluant des entrées de cadencement représentatives d'un instant de début pour les pistes, et dans lequel l'instant de début dans l'entrée de cadencement d'au moins une des pistes principales est remplacé par l'instant de début de sa piste auxiliaire correspondante.

15. Disque optique selon la revendication 2, dans lequel l'information d'accès de disque est incluse dans une table des matières (TOC) du disque optique, la TOC comprenant des entrées de numéro de piste pour chacune des pistes sur le disque optique, et dans lequel l'entrée, ou les entrées, de numéro de piste dans la TOC pour la, ou chaque, piste principale, sont interverties avec l'entrée, ou les entrées, respectives de numéro de piste pour la, ou chacune des, pistes auxiliaires correspondantes.

16. Disque optique selon la revendication 10, dans lequel la TOC comprend une entrée de quantité totale de pistes représentative du nombre total de pistes sur le disque, et dans lequel cette entrée de quantité totale de pistes indique seulement le nombre total de pistes principales sur le disque.

17. Disque optique selon la revendication 12, dans lequel l'indicateur de numéro de piste pour la, ou chaque, piste auxiliaire qui possède une piste principale correspondante est fixé de façon à indiquer le numéro de piste de la piste principale correspondante.

18. Disque optique selon la revendication 1, comprenant en outre de l'information d'accès de disque de substitution mémorisée sur le disque sous forme cryptée, l'information d'accès de disque de substitution, lorsqu'elle est décryptée, étant utilisable par un lecteur de données de disque optique, lorsqu'elle est ainsi décryptée, pour permettre la localisation de la, ou des, pistes principales.

19. Disque optique selon la revendication 18, comprenant en outre du code de programme d'ordinateur sur le disque et qui, lorsqu'il est exécuté, fait qu'un ordinateur qui contient le lecteur de données de disque optique accède à et décrypte l'information d'accès de disque de substitution, et fait que le lecteur de données de disque optique utilise ensuite l'information décryptée d'accès de disque pour localiser des pistes sur le disque.

20. Disque optique selon la revendication 18, dans lequel l'information d'accès de disque de substitution permet la localisation seulement des pistes principales une fois que ladite information d'accès de disque de substitution a été décryptée.

21. Disque optique selon la revendication 18, dans lequel l'information d'accès de disque de substitution est mémorisée sur le disque sous forme d'une piste auxiliaire.

22. Disque optique selon la revendication 1, dans lequel au moins une des pistes auxiliaires comprend des données comprimées ou cryptées.

23. Disque optique selon la revendication 22, dans lequel les données comprimées représentent un signal audio codé suivant une norme comme MP3.

24. Disque optique selon la revendication 1, dans lequel la, ou au moins une des pistes auxiliaires, incorpore une technique numérique de gestion de droits.

25. Disque optique selon la revendication 1, dans lequel la, ou au moins une des pistes auxiliaires, incorpore une protection contre la copie.

26. Procédé de génération de données pour écriture sur un disque optique, le procédé comprenant :
la génération de données principales représentatives de m piste(s) principale(s) pour le disque optique (m ≥ 1) ;
la génération de données auxiliaires représentatives de n piste(s) auxiliaire(s) pour le disque optique (n ≥ 1) ; et
l'assemblage d'une table des matières (TOC) pour le disque optique, la TOC contenant de l'information de commande d'accès de disque qui, lorsqu'elle est écrite sur un disque optique, indique à un lecteur de données de disque optique qu'il y a m pistes au total écrites sur le disque optique.

27. Procédé selon la revendication 26, dans lequel l'information de commande d'accès de disque indique en outre à un lecteur de disque compact audionumérique (CD-DA pour "Compact Disk-Digital Audio") qu'il y a m pistes au total écrites sur le disque optique, l'information d'accès de disque faisant que m des m+n pistes soient accessibles à un lecteur de données de disque optique, différentes des m pistes qui sont accessibles par un lecteur de CD-DA.

28. Procédé selon la revendication 26, dans lequel l'étape d'assemblage d'une TOC comprend :
l'écriture, sur un disque optique, des données principales et auxiliaires engendrées ;
la relecture, vers un dispositif d'analyse de données, des données ainsi écrites, y compris d'une TOC non modifiée incluant de l'information d'accès de disque non modifiée pour la totalité des m+n pistes ; et
la mise en forme de la TOC non modifiée de façon à produire une TOC modifiée contenant ladite information de commande d'accès de disque représentative pour un lecteur de CD audio de la présence des m pistes principales, et pour un lecteur de données de disque optique de la présence de n pistes auxiliaires et m-n pistes principales.

29. Procédé selon la revendication 28, dans lequel la TOC non modifiée comprend en outre une pluralité d'indicateurs de numéro de piste, le procédé comprenant en outre la mise en forme de la TOC non modifiée de façon à altérer les indicateurs de numéro de piste pour au moins certaines des pistes principales.

30. Procédé selon la revendication 29, dans lequel l'étape de mise en forme de la TOC non modifiée comprend la mise à zéro des indicateurs de numéro de piste des pistes principales qui sont à altérer, de sorte qu'un lecteur de données de disque optique ne détecte plus la présence dudit ou desdits indicateurs altérés de numéro de piste principale.

31. Procédé selon la revendication 29, dans lequel l'étape de mise en forme de la TOC non modifiée comprend la suppression des parties de la TOC se rapportant à au moins certaines des m pistes principales.

32. Procédé selon la revendication 29, dans lequel au moins une des m pistes principales a une piste auxiliaire correspondante, l'étape de mise en forme de la TOC non modifiée comprenant en outre le remplacement des indicateurs de numéro de piste de chacune des pistes auxiliaires qui ont une piste principale correspondante avec l'indicateur de numéro de piste de cette piste principale correspondante dans la TOC non modifiée.

33. Procédé selon la revendication 29, dans lequel l'étape de mise en forme de la TOC comprend la permutation des indicateurs de numéro de piste d'au moins une des pistes principales avec des indicateurs de numéro de piste pour un nombre correspondant de pistes auxiliaires.

34. Procédé selon la revendication 28, dans lequel l'étape de mise en forme de la TOC comprend le remplacement de l'instant de début de la, ou d'au moins une des, pistes principales par l'instant de début d'une piste auxiliaire associée.

35. Procédé selon la revendication 28, dans lequel la TOC non modifiée comprend en outre une entrée de quantité totale de pistes, l'étape de mise en forme de la TOC non modifiée comprenant la réduction de la quantité totale de pistes dans l'entrée de quantité totale de pistes de sorte qu'elle indique, dans la TOC modifiée, seulement le nombre de pistes principales présentes.

36. Disque optique maître sur lequel sont écrites ou matricées des données engendrées selon le procédé de la revendication 24.

37. Disque optique formé directement ou indirectement à partir du disque optique maître selon la revendication 36.

38. Disque optique sur lequel des données sont gravées, les données étant engendrées selon le procédé de la revendication 26.

39. Procédé de commande d'accès par un lecteur de données de disque optique à un disque optique ayant au moins une piste principale et au moins une piste auxiliaire, le procédé comprenant l'étape consistant à empêcher la localisation de la, ou de l'au moins une, piste principale lorsque le disque est lu par ledit lecteur de données de disque optique, et à diriger à la place le lecteur de données vers la, ou une, piste auxiliaire associée.

40. Procédé selon la revendication 39, le procédé comprenant en outre le fait de permettre la localisation seulement de la, ou de chaque, piste principale lorsque le disque est lu par un lecteur de CD-DA.

41. Procédé selon la revendication 39, dans lequel le disque comporte m pistes principales (m ≥ 1) et n pistes auxiliaires (n ≥ 1), le procédé comprenant en outre l'autorisation d'accès à la, ou aux n pistes auxiliaires et à (m-n) des pistes principales lorsqu'un lecteur de données de disque optique accède au disque, et l'autorisation d'accès aux m pistes principales lorsqu'un lecteur de CD-DA accède audit disque.
